# EUROPÄISCHE PATENTSCHRIFT

(11) **EP 2 638 794 B1**
(45) Veröffentlichungstag und Bekanntmachung des Hinweises auf die Patenterteilung: **01.05.2019**
(21) Anmeldenummer: 13158452.6
(22) Anmeldetag: 08.03.2013
(51) Int. Cl.: A01D 75/18, A01F 29/16

(54) **Fahrbarer Häcksler für Pflanzen mit einem Überwachungssystem des Rotors in Abhängigkeit der Abdeckungen**
Moveable shredder for plants with a monitoring system of the rotor depending on covers
Broyeur mobile pour plantes doté d'un système de surveillance du rotor en fonction de la position du couvercle

(30) Priorität: 14.03.2012 IT BZ20120010
(43) Veröffentlichungstag der Anmeldung: 18.09.2013
(73) Patentinhaber: Seppi M. AG, 39052 Kaltern (IT)
(72) Erfinder: Seppi, Lorenz, 39052 Kaltern (IT)
(74) Vertreter: Ausserer, Anton

(56) Entgegenhaltungen:
- EP-A1- 2 108 245
- WO-A1-2009/156454
- DE-A1- 4 309 668
- GB-A- 2 206 662
- JP-A- 11 005 038

## Beschreibung

Die vorliegende Erfindung bezieht sich auf einen fahrbaren Häcksler für Pflanzen mit einem Rotor mit horizontaler Achse mit einem Überwachungssystem des Rotors in Abhängigkeit der Abdeckungen.

Häcksler mit Rotor werden üblicherweise zum Häckseln, beispielsweise von Pflanzen oder ähnlichem verwendet. Die Häckselarbeit kann in Fahrtrichtung des Häckslers oder gegen die Fahrtrichtung des Häckslers erfolgen. Die zu häckselnde Materialgröße kann sich ändern. Um einen unkontrollierten Austritt des gehäckselten Materials und eine eventuelle Beschädigung von Personen oder Gegenständen in der Nähe des Häckslers zu vermeiden ist der die Häckselarbeit durchführende Häckselrotor durch eine Abdeckung geschützt. Diese Abdeckung begrenzt oder beschränkt und reduziert die Effizienz der Häckselarbeit des zu häckselnden Materials, insbesondere wenn das Material eine erhebliche Größe besitzt.

Das Problem des Austritts des gehäckselten Materials lieg vor allem vor, wenn der Häckselrotor sich nach oben dreht, d.h. gegen die übliche Fahrtrichtung des Häckslers. Dreht der Rotor nach oben, wird auch das Material nach oben geschleudert. In diesem Fall hat die oberhalb des Rotors angeordnete Abdeckung die wichtige Aufgabe, das nach oben geschleuderte Häckselmaterial aufzuhalten.

Dreht der Rotor nach unten, d.h. in Fahrtrichtung des Häckslers, so wird das Material in Richtung des Bodens geschleudert und die Abdeckung betreibt eine sehr begrenztere Funktion.

Es ist zu bemerken, dass Häcksler sehr effizienter arbeiten, wenn sich der Rotor nach oben dreht, allerdings unter bestimmten Bedingungen ein öffnen der Abdeckung notwendig ist.

Beim Stand der Technik sind manuelle, mechanische Vorrichtungen bekannt, die vom Benutzer des Häckslers mit dazu angemessenen Anweisungen für die Arretierung der Abdeckung verwendet werden.

Insbesondere wurde festgestellt, dass, wenn der Benutzer den Häcksler nicht fachgemäß verwendet hat, d.h. mit dem Rotor, der nach oben dreht, und mit der Abdeckung die offen ist, so Personen oder Gegenstände in der Nähe gefährdet wären.

Dies wird auch durch die EN 13524 geregelt welche die Sicherheitsanforderungen für fahrbare Häcksler festlegt.

In dieser werden die Anforderungen für einen sicheren Umgang mit dem bewegbaren Häcksler festgelegt, insbesondere wie weit die Abdeckung bei einer bestimmten Drehung des Rotors in eine oder die andere Richtung geöffnet werden darf. Die in D1 JP 110050038 A beschriebene Maschine umfasst keine Mittel zu Erkennung der Drehrichtung des Motors. Außerdem handelt es sich hierbei um eine Maschine, die nicht zur Bearbeitung von Boden gedacht ist, sondern nur zum Häckseln des Materials.

Die vorliegende Erfindung setzt sich zum Ziel, ein Überwachungssystem des Rotors eines Häckslers auszuführen, das die Verwendung desselben nicht erlaubt, wenn der Rotor nach oben dreht und die Abdeckung desselben offen ist.

Die Aufgabe der vorliegende Erfindung wird durch einen fahrbaren Häcksler mit einer Überwachungssystem gemäß Anspruch 1 gelöst.

Ein Häcksler mit Rotor kann als selbständige Maschine oder als Gerät z.B. eines Traktors ausgeführt sein. Der Häcksler umfasst einen Rahmen, einen Werkzeugträgerrotor, der drehbar vom Rahmen mit einer zum zu behandelnden Boden im Wesentlichen parallelen Achse aufgenommen ist, die senkrecht zur Fahrtrichtung des Häckslers liegt, einen Antrieb, der eine mit dem Werkzeugträger getriebemäßig verbundene Welle bewegt, und einen Deckel, der den Werkzeugträgerrotor oben umgibt. Dieser Deckel kann manuell oder mittels einer Reihe von Kolben zwischen einer offenen und einer geschlossenen Stellung bewegt werden. In der geschlossenen Stellung besitzt man einen besseren Schutz gegen das gehäckselte Material, das ausgestoßen wird. Das Problem des Ausstoßes ist besonders schwerwiegend, wenn der Rotor sich derart dreht, dass die Werkzeuge eine Bewegung von unten nach oben auf der Seite der Ausstoßes des Häckslers durchführen. Auf diese Art und Weise wird das gehäckselte Material von unten nach oben geschleudert und bei Nichtanwesenheit der Abdeckung, die das Material versperrt, kann dieses innerhalb eines weiten, unkontrollierten Radius Personen oder Gegenstände treffen. Diese Drehrichtung wird als "gegen die Fahrtrichtung" beschrieben. Soll der Häcksler Material erheblicher Größe häckseln, wird bevorzugt, den Deckel zu öffnen, sonst entsteht die Gefahr eines Staus des gehäckselten Materials innerhalb des Häckslers oder ein minderwertiges Ergebnis der Häckselarbeit.

Die Einstellung des Deckels kann manuell, z.B. mittels eines mechanischen Hebels oder mittels einer Reihe von Zylindern erfolgen.

Um eine nicht fachgemäße Verwendung des Rotorhäckslers am Häcksler zu unterbinden, werden Mittel zum Erfassen der Stellung des Deckels eingerichtet. Auf diese Art und Weise kann der Rotor angehalten werden, sobald die Abdeckung offen ist und die Bewegung des Rotors von unten nach oben seitens des Ausstoßes des gehäckselten Materials von unten nach oben erfolgt oder der Deckel kann arretiert werden, sobald der Rotor dazu eingestellt ist, um sich in diese Richtung zu drehen.

Die Arretierung des Rotors kann auf eine Vielzahl von Weisen erfolgen, z.B. kann der Antrieb angehalten werden, der den Rotor, das Getriebe oder ähnlichem antreibt.

Weitere Merkmale und Einzelheiten gehen aus den Patentansprüchen und aus der folgenden Beschreibung von bevorzugten Ausführungsformen hervor, die in der beigefügten Zeichnung dargestellt sind. Es zeigen,
- Figur 1: eine schematische Darstellung von vier möglichen Bewegungsausbildungen des Häckslerrotors und der Stellung der Abdeckung, und
- Figur 2: ein Steuerschema.

Der Rotorhäcksler 1 umfasst einen Rotor 2, auf dem eine Reihe von Werkzeugen 3 angeordnet ist.

Der die Werkzeuge aufweisende Rotor ist durch eine Abdeckung 4 geschützt. Die Abdeckung umfasst zwei Teile, einen ersten Teil 4a, der am Rahmen 5 des Rotorhäckslers befestigt ist, und einen zweiten Teil 4b, der am ersten angelenkt und ausrichtbar ist.

Der zweite Teil der Abdeckung 4b ist von einer ersten, geschlossenen Stellung in eine zweite, offene Stellung verstellbar. In der zweiten, offenen Stellung wird der Auswurf des gehäckseltem Materials erleichtert und es werden Verstopfungen innerhalb des Häckslers vermieden.

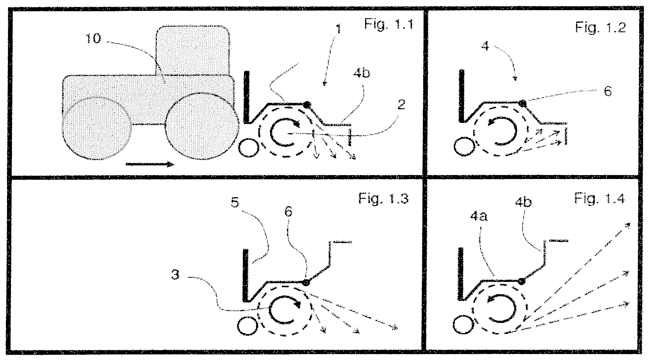

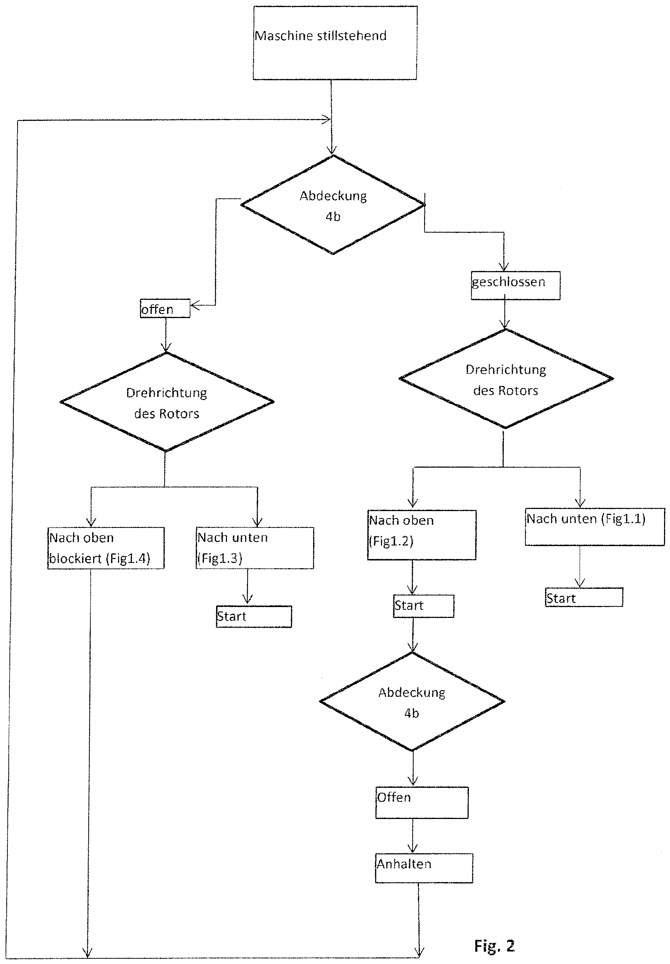

Sollte sich in der offenen Stellung der Rotor derart drehen, dass die Werkzeuge von unten nach oben im Bereich der Auswurfstellung umlaufen, besteht die Gefahr, dass das gehäckselte Material aus dem Häcksler unkontrolliert ausgeworfen wird und zwar auch in großer Entfernung, wobei eventuell Schäden an Personen oder an Gegenständen hervorgerufen werden könnten. Diese Ausbildung zwischen der Bewegung des Rotors und Stellung der Abdeckung 4b ist keine fachgerechte Benutzung der Maschine. Um die Verwendung dieser Art zu unterbinden, wie aus Figur 1, 4 hervorgeht, wird ein Kontrollschema gemäß dem Diagramm der Figur 2 verwendet. Auf diese Art und Weise ist die Betriebsweise der Maschine auf nicht fachgerechte Weise nicht ermöglicht.

Das Schema gemäß Figur 2 schließt die Betriebswiese gemäß Figur 1, 4 aus, d.h. auf gefährdender Art und Weise, von den Arten von möglichen Betriebsweisen gemäß einem nicht begrenzendem, bevorzugten Betrieb.

Am Anfang ist der Rotor 2 in Ruhestellung und so auch die Zapfwelle. Danach wird die Stellung des Schutzes, d.h. der Abdeckung 4b überprüft, die mit dem ersten Abdeckungsteil 4a mittels einer Anlenkung verbunden ist. Ist diese offen, wird eine Kontrolle bezüglich der Drehrichtung des Rotors durchgeführt.

Ist die Abdeckung offen, wird die Richtungswechselvorrichtung des Betriebes des Rotors arretiert.

Diese Arretierung erfolgt mittels einer Steuereinheit, welche die Drehung des Rotors des Häckslers nicht erlaubt, wenn sich die Abdeckung 4, 4a, 4b in offener Stellung befindet, mit den Werkzeugen 3 des Rotors in Entfernung vom Boden in Richtung der Öffnung.

In einer bevorzugten Ausführungsform besitzt der Häcksler einen Rotor, der durch einen Getriebekasten 11 mit manueller Richtungsschaltung durch eine Zapfenwelle, betätigt wird, die einen hydraulischen Zylinder 12 einer drehbaren Abdeckung 4, 4a, 4b, der die Öffnung und die Schließung der Abdeckung steuert, und überdies einen weiteren hydraulischen Zylinder 13 betätigt, der den Getriebekasten antreibt. Bei der Öffnung der Abdeckung 4b entkuppelt der Zylinder 13 den, den Rotor antreibenden Getriebekasten. Beim Schließen des Deckels gibt der Zylinder 13 die Wahl der beiden Drehrichtungen frei.

Eine weitere bevorzugte Ausführungsform sieht den Antrieb des Rotors über einen Hydromotor 13 vor. Ein Zylinder 11 zur Öffnung der Abdeckung und ein Steuerventil 14 sind vorgesehen. Beim Öffnen der Abdeckung sperrt das Steuerventil 14 die Drehrichtung nach oben. Bei der Schließung der Abdeckung gibt das Ventil 14 die Wahl beider Drehrichtungen frei.

### Aufstellung der Bezugsziffern

- 1: Rotorhäcksler
- 2: Rotor
- 3: Werkzeuge
- 4: Abdeckung
- 4a: erster Abdeckungsteil
- 4b: zweiter Abdeckungsteil
- 5: Rahmen
- 6: Anlenkung
- 10: Traktor

## Patentansprüche

1. Fahrbare Rotorhäcksler (1) für Pflanzen, umfassend einen Rahmen (5), einen Werkzeugträgerrotor (2), der vom Rahmen mit einer zum behandelnden Boden im Wesentlichen parallelen und zur Fahrtrichtung des Häckslers senkrechten Achse aufgenommen ist, einen Antrieb zur Bewegung einer mit dem Werkzeugträgerrotor (2), auf dem eine Reihe von Werkzeugen (3) angeordnet sind, betriebsmäßig verbundenen Welle, eine den Werkzeugträgerrotor oben umgebende Abdeckung (4, 4a, 4b), Sensoren zur Erfassung der Stellung einer Abdeckung für einen Rotor mit zwei Drehrichtungen eines Häckslers und Mittel zur Erfassung der Drehrichtung dieses Rotors, **dadurch gekennzeichnet, dass** der Häcksler eine Steuereinheit umfasst, welche die Drehung des Rotors des Häckslers nur dann nicht zulässt, falls die Abdeckung (4, 4a, 4b) sich in einer offenen Stellung befindet und der Rotor dazu aktiviert ist, sich nach oben zu drehen, d.h. gegen die Fahrtrichtung des Häckslers.

2. Rotorhäcksler nach Anspruch 1, **dadurch gekennzeichnet, dass** die Abdeckung mechanisch in Schließstellung arretiert ist, falls der Rotor (2) sich gegen die Fahrtrichtung des Häckslers dreht.

3. Rotorhäcksler nach Anspruch 1, **dadurch gekennzeichnet, dass** die Drehrichtungswechselvorrichtung des Häckslers arretiert ist, falls die Abdeckung offen ist.

4. Rotorhäcksler nach Anspruch 1, **dadurch gekennzeichnet, dass** der Rotor (2) von einem Hydromotor bewegt ist, der mit einer Pumpe verbunden ist, die Überdies einen Zylinder einer drehbaren Abdeckung (4, 4a, 4b) aufweist, der die Öffnung und die Schließung der Abdeckung steuert, wobei zwischen der Pumpe und dem Zylinder ein Ventil zwischengeschaltet ist, welches den Zylinder in Abhängigkeit der Drehrichtung des Rotors aktiviert oder deaktiviert.

## Claims

1. A displaceable rotor-operated mulching machine (1) comprising a frame (5), a tool-holder rotor (2) received in the frame with its axis substantially parallel to a soil to be teated and perpendicular to the direction of movement of the mulching machine, an actuator, which is adapted to drive a shaft that is operably connected to the tool-holder rotor (2), on which a series of tools (3) are placed, a cover (4, 4a, 4b) surrounding the tool-holder rotor at its top, sensors for detecting the position of a cover for a rotor, rotating in two directions, of a mulching machine and means for detecting the direction of rotation of said rotor, **characterized in that** the mulching machine comprises a control unit for only preventing the rotation of the rotor of said mulching machine when said cover (4, 4a, 4b) is in the open position and the rotor is driven to rotate upwards, i.e. opposite to the direction of movement of the mulching machine.

2. A rotor-operated mulching machine as claimed in claim 1, **characterized in that** the cover is mechanically locked in the closed position if the rotor (2) rotates opposite to the direction of movement of the mulching machine.

3. A rotor-operated mulching machine as claimed in claim 1, **characterized in that** the operating direction switching device of the mulching machine is locked if the cover is open.

4. A rotor-operated mulching machine as claimed in claim 1, **characterized in that** the rotor (2) is driven by a hydraulic motor connected to a pump, which also has a cylinder of a rotating cover (4, 4a, 4b), controlling the opening and closing operation of the cover, a valve being interposed between the pump and the cylinder, for enabling or disabling the cylinder according to the direction of rotation of the rotor.

## Revendications

1. Broyeur mobile à rotor (1) comprenant un cadre (5), un rotor de porte-outils (2) logé dans le cadre avec son axe sensiblement parallèle à un terrain à traiter et perpendiculaire à la direction de marche du broyeur, un actionneur, apte à entraîner un arbre relié fonctionnellement au rotor de porte-outils (2) sur lequel est positionnée une série d'outils (3), une couverture (4, 4a, 4b) entourant le rotor de porte-outils par le dessus, des capteurs pour détecter la position d'une couverture pour un rotor, tournant dans les deux directions, d'un broyeur et des moyens pour détecter la direction de rotation dudit rotor, **caractérisé en ce que** le broyeur comprend une unité de commande pour n'empêcher la rotation du rotor que lorsque ladite couverture (4,4a, 4b) est dans la position d'ouverture et le rotor est entraîné pour tourner vers le haut, c'est-à-dire dans une direction opposée à la direction de mouvement du broyeur.

2. Broyeur à rotor selon la revendication 1, **caractérisé en ce que** la couverture est verrouillée mécaniquement dans la position de fermeture si le rotor (2) tourne dans une direction opposée à la direction de mouvement du broyeur.

3. Broyeur à rotor selon la revendication 1, **caractérisé en ce que** le dispositif de changement de la direction de fonctionnement du broyeur est verrouillé si la couverture est ouverte.

4. Broyeur à rotor selon la revendication 1, **caractérisé en ce que** le rotor (2) est entraîné par un moteur hydraulique relié à une pompe, qui comporte également une couverture tournante (4, 4a,4b), commandant l'ouverture et la fermeture de la couverture, une soupape étant interposée entre la pompe et le cylindre, pour activer et désactiver le cylindre en fonction de la direction de rotation du rotor.
